# EUROPÄISCHE PATENTANMELDUNG

(11) **EP 3 788 934 A1**
(43) Veröffentlichungstag der Anmeldung: **10.03.2021**
(21) Anmeldenummer: 20189273.4
(22) Anmeldetag: 04.08.2020
(51) Int. Cl.: A47L 15/42, A47L 15/00

(54) **GESCHIRRSPÜLMASCHINE UND VERFAHREN ZUM BETRIEB EINER GESCHIRRSPÜLMASCHINE**

(30) Priorität: 13.08.2019 DE 102019121736
(71) Anmelder: Miele & Cie. KG, 33332 Gütersloh (DE)
(72) Erfinder: Tegeler, Daniel, 33649 Bielefeld (DE); Sgurski, Eugen, 32791 Lage (DE); Dees, Florian, 33649 Bielefeld (DE); Fink, Verena, 33602 Bielefeld (DE); Schröder, Nils, 33611 Bielefeld (DE); Dahms, Tobias, 30519 Hannover (DE)

(57) **Zusammenfassung**

Die Erfindung betrifft eine Geschirrspülmaschine, insbesondere Haushaltsgeschirrspülmaschine, mit einem einen Spülraum (3) bereitstellenden Spülbehälter (2), der der Aufnahme von zu reinigendem Spülgut dient, und mit einem Frischwassertank (17), wobei der Frischwassertank (17) an den Spülbehälter (2) strömungstechnisch angeschlossen ist, sowie mit einem zweiten Frischwassertank (23) und einem vom zweiten Frischwassertank (23) beherbergten Wärmetauscher (24), wobei der Spülbehälter (2) und der Wärmetauscher (24) in einen ersten Strömungskreislauf (25) zur Spülflottenumwälzung und der erste und der zweite Frischwassertank (17, 23) in einen zweiten Strömungskreislauf (26) zur Frischwasserumwälzung integriert sind.

## Beschreibung

Die Erfindung betrifft eine Geschirrspülmaschine, insbesondere eine Haushaltsgeschirrspülmaschine, mit einem einen Spülraum bereitstellenden Spülbehälter, der der Aufnahme von zu reinigendem Spülgut dient, und mit einem Frischwassertank, wobei der Frischwassertank an den Spülbehälter strömungstechnisch angeschlossen ist.

Geschirrspülmaschinen im Allgemeinen sowie solche der gattungsgemäßen Art sind aus dem Stand der Technik an sich gut bekannt, weshalb es eines gesonderten druckschriftlichen Nachweises an dieser Stelle dem Grunde nach nicht bedarf.

Vorbekannte Geschirrspülmaschinen verfügen über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dgl. handeln kann.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die von einer Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und eine Ablauf- oder Abwasserpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe abgepumpt und verworfen. Mit Beginn eines Spülprogramms wird dem Spülbehälter Frischwasser zugeführt, das typischerweise dem öffentlichen Frischwassernetz entnommen ist. Nach einer Befüllung des Spülbehälters mit Frischwasser beginnt das eigentliche Spülprogramm und die Umwälzpumpe wird zwecks Beschickung der Sprüheinrichtung in Gang gesetzt.

Während eines Spülprogramms werden unterschiedliche Programmabschnitte durchlaufen, beispielsweise ein Vorspülprogramm, ein Reinigungsprogramm, ein Zwischenspülprogramm, ein Klarspülprogramm und/oder dgl. Insbesondere während eines Reinigungsprogramms sowie während eines Klarspülprogramms erfolgt eine Aufheizung der Spülflotte. Es kommen zu diesem Zweck entsprechende Heizeinrichtungen zum Einsatz, die je nach Ausgangstemperatur des Frischwassers entsprechend viel Energie benötigen, bis die Zieltemperatur der Spülflotte für den jeweiligen Spülprogrammabschnitt erreicht ist. Dabei ist die benötigte Aufheizenergie umso größer, je größer die Differenz zwischen der Ausgangstemperatur des Frischwassers und der für die Durchführung eines Spülprogrammabschnitts gewünschten Zieltemperatur ist.

Aus dem Stand der Technik ist in diesem Zusammenhang ein Frischwassertank bekannt geworden, der außenseitig am Spülbehälter angeordnet ist. Dieser Frischwassertank ist einerseits an eine Frischwasserleitung und andererseits an den Spülbehälter strömungstechnisch angeschlossen. Nach Beendigung eines ordnungsgemäß durchlaufenden Spülprogramms wird der Frischwassertank mit Frischwasser aus der Frischwasserleitung befüllt. Dieses verbleibt bis zur Durchführung eines nächsten Spülprogramms im Frischwassertank und wird von diesem bevorratet. Dies erbringt den Vorteil, dass sich das Frischwasser von typischerweise 17°C auf Raumtemperatur von z.B. 23° erwärmen kann. Ein als nächstes anstehendes Spülprogramm wird dann zumindest teilweise mit auf Raumtemperatur vorgewärmtem Frischwasser durchgeführt, so dass die Temperaturdifferenz zwischen der Ausgangstemperatur des in den Spülbehälter eingeleiteten Frischwassers und der zur Durchführung eines Spülprogrammabschnitts zu erreichenden Zieltemperatur mit der Folge verkleinert ist, dass weniger Heizenergie benötigt wird.

Aus dem Stand der Technik ist es gemäß der DE 10 2013 213 970 B4 ferner bekannt, die an die Ablauf- oder Abwasserpumpe angeschlossene Abwasserleitung durch den Frischwassertank hindurchzuführen. Dies hat den positiven Effekt, dass während eines Spülprogrammabschnitts erwärmte und nun mittels der Abwasserpumpe zu verwerfende Spülflotte durch den Frischwassertank geführt wird, infolge dessen es zu einem Wärmeübergang von der noch vergleichsweise warmen und zu verwerfenden Spülflotte auf das im Frischwassertank bevorratete, kühlere Frischwasser kommt.

Obgleich sich die vorbeschriebenen Maßnahmen im alltäglichen Praxiseinsatz bewährt haben, besteht weiterer Verbesserungsbedarf. Es ist insbesondere angestrebt, ein Wärmerückgewinnungssystem vorzuschlagen, das effektiver dazu beiträgt, Heizenergie dadurch einsparen zu können, dass verbrauchter Spülflotte Wärme zur Aufheizung von Frischwasser entzogen wird.

Es ist deshalb die **Aufgabe** der Erfindung, eine Geschirrspülmaschine der eingangs genannten Art mit einem Wärmerückgewinnungssystem vorzuschlagen, das es in gesteigertem Maße gestattet, die zur Durchführung eines Spülprogramms benötigte Heizenergie durch Wärmeübertrag zu minimieren.

Zur **Lösung** dieser Aufgabe wird mit der Erfindung eine gattungsgemäße Geschirrspülmaschine vorgeschlagen, die sich auszeichnet durch einen zweiten Frischwassertank und einen vom zweiten Frischwassertank beherbergten Wärmetauscher, wobei der Spülbehälter und der Wärmetauscher in einen ersten Strömungskreislauf zur Spülflottenumwälzung und der erste und der zweite Frischwassertank in einen zweiten Strömungskreislauf zur Frischwasserumwälzung integriert sind.

Des Weiteren wird ein Verfahren zum Betrieb einer erfindungsgemäßen Geschirrspülmaschine vorgeschlagen, bei dem zu Beginn eines Reinigungsprogramms im ersten und im zweiten Frischwassertank bevorratetes Frischwasser in den Spülbehälter geleitet und das Reinigungsprogramm durchgeführt wird, bei dem der erste und der zweite Frischwassertank mit Frischwasser wiederbefüllt werden und bei dem nach einer Beendigung des Reinigungsprogramms zeitgleich einerseits aus dem Spülbehälter stammende Spülflotte im Umwälzbetrieb durch den ersten Strömungskreislauf und andererseits aus den Frischwassertanks stammendes Frischwasser im Umwälzbetrieb durch den zweiten Strömungskreislauf geführt wird.

Erfindungsgemäß ist ein zum ersten Frischwassertank parallel geschalteter, zweiter Frischwassertank vorgesehen. Dieser dient im bestimmungsgemäßen Verwendungsfall der Bevorratung von Frischwasser. Dabei ist es der Sinn und Zweck beider Frischwassertanks, davon jeweils bevorratetes Frischwasser auf ein höheres Temperaturniveau anzuheben, so dass im weiteren Gang eines bestimmungsgemäß durchgeführten Spülprozesses im Unterschied zum Stand der Technik weniger Heizenergie zur Erzielung einer für den jeweiligen Spülprozess zu erreichenden Spülflottentemperatur aufzuwenden ist.

Die erfindungsgemäße Ausgestaltung eines zweiten Frischwassertanks erbringt zunächst einmal den Vorteil, dass die Menge an Frischwasser, die bevorratet werden kann, vergrößert ist. Dabei sind das Tankvolumen von erstem Frischwassertank und zweitem Frischwassertank bevorzugterweise in Kombination so ausgelegt, dass die bevorratbare Menge an Frischwasser so groß ist, dass für die bestimmungsgemäße Durchführung eines Spülprozesses kein weiteres Frischwasser über eine Frischwasserleitung während des Spülprozesses dem Spülprozess zuzuführen ist. Das bevorratete Frischwasser reicht mit anderen Worten aus, um einen bestimmungsgemäßen Spülprozess durchzuführen.

Das Vorsehen von zwei Frischwassertanks hat zudem den Vorteil, dass ein zielgerichteter Wärmeübertrag von in einem Spülprogramm aufgeheizter Spülflotte auf bevorratetes Frischwasser stattfinden kann. Erfindungsgemäß ist zu diesem Zweck vorgesehen, dass der zweite Frischwassertank einen Wärmetauscher beherbergt. Mittels dieses Wärmetauschers ist es möglich, Wärmeenergie von zuvor aufgeheizter Spülflotte auf Frischwasser zu übertragen.

Es sind erfindungsgemäß des Weiteren ein erster Strömungskreislauf und ein zweiter Strömungskreislauf vorgesehen. Dabei sind der Spülbehälter und der Wärmetauscher in den ersten Strömungskreislauf und der erste Frischwassertank und der zweite Frischwassertank in den zweiten Strömungskreislauf integriert. Der erste Strömungskreislauf verbindet mithin den Spülbehälter mit dem Wärmetauscher strömungstechnisch. Der zweite Strömungskreislauf dient der strömungstechnischen Verbindung von erstem Frischwassertank und zweitem Frischwassertank.

Diese Ausgestaltung gestattet es, Frischwasser im zweiten Strömungskreislauf von Frischwassertank zu Frischwassertank zirkulieren zu lassen, das heißt im Umwälzbetrieb umzupumpen. Hiervon strömungstechnisch getrennt kann Spülflotte im ersten Strömungskreislauf umgewälzt werden, und zwar durch den Wärmetauscher hindurch. Am Ende eines Spülprogramms aufgeheizte und im Weiteren nicht mehr benötigte Spülflotte kann mithin durch den Wärmetauscher geführt werden, bevor sie abgepumpt und einer Abwasserleitung zugeführt wird. Gleichzeitig kann durch den zweiten Strömungskreislauf Frischwasser geführt werden, so dass im Wärmetauscher Wärmeenergie von der Spülflotte auf das Frischwasser übertragen werden kann.

Dabei erlaubt die erfindungsgemäße Ausgestaltung zwei verschiedene Verfahrensweisen, die wahlweise auch miteinander kombiniert werden können, was aus Gründen einer maximierten Wärmeübertragung bevorzugt ist.

Gemäß einem ersten Verfahrensschritt wird nach einem bestimmungsgemäß durchgeführten Reinigungsprogramm die noch heiße Spülflotte mit Frischwasser durch den Wärmetauscher geführt. Infolgedessen kommt es zu einer Aufheizung des Frischwassers. Dieser Umwälzprozess wird für eine vorgebbare Zeitdauer aufrechterhalten. Anschließend wird die für den weiteren Spülprozess nicht mehr benötigte Spülflotte abgepumpt, aber nur zum Teil. Ein Teil der nicht mehr benötigten Spülflotte verbleibt im Wärmetauscher. In einem zweiten Verfahrensschritt kann die im Wärmetauscher verbliebene Spülflotte nach wie vor dazu genutzt werden, im zweiten Strömungskreislauf zirkulierendes Frischwasser zusätzlich aufzuheizen. Dabei kann insbesondere dieser zweite Verfahrensschritt zeitparallel zum weitergeführten Spülprozess durchgeführt werden, das heißt dieser ist nicht für einen Wärmeübertrag von der Spülflotte auf das Frischwasser zu unterbrechen. Sobald auch dieser zweite Verfahrensschritt beendet ist, kann dann die vom Wärmetauscher bevorratete Spülflotte abgepumpt und verworfen werden.

Zur Bereitstellung eines hinreichenden Tankvolumens ist der seitlich des Spülbehälters zur Verfügung stehende Bauraum nicht ausreichend. Es wird deshalb mit der Erfindung vorgeschlagen, den zweiten Frischwassertank als Sockeltank auszubilden, das heißt ihn im Sockelbereich der Geschirrspülmaschine unterhalb des Spülbehälters anzuordnen. Eine solche Ausgestaltung hat aber zur Folge, dass allein eine schwerkraftbedingte Entleerung des zweiten Frischwassertanks in den Spülbehälter nicht stattfinden kann. Erfindungsgemäß ist deshalb vorgesehen, dass der zweite Strömungskreislauf eine Pumpe aufweist, die im Betriebsfall dazu dient, das vom zweiten Frischwassertank bevorratete Frischwasser hoch in den Spülbehälter zu pumpen.

Der zweite Strömungskreislauf weist gemäß einem weiteren Merkmal der Erfindung eine Hinleitung einerseits und eine Rückleitung andererseits auf. Dabei verbindet die Rückleitung den zweiten Frischwassertank mit dem ersten Frischwassertank. In diese Rückleitung ist bevorzugterweise die Pumpe integriert.

Einer Pumpe in der Hinleitung bedarf es nicht, weil eine Befüllung des zweiten Frischwassertanks unter Zwischenschaltung des ersten Frischwassertanks vorzugsweise allein unter Schwerkrafteinwirkung stattfinden kann. Denn der als Seitentank ausgebildete erste Frischwassertank ist in Höhenrichtung oberhalb des zweiten Frischwassertanks angeordnet.

In die Hinleitung ist gemäß einem weiteren Merkmal der Erfindung ein Umschaltventil integriert. Dieses dient dazu, die Hinleitung im Bedarfsfall öffnen bzw. schließen zu können. Dabei ist ein Öffnen der Hinleitung vorgesehen, wenn entweder ein Umwälzbetrieb stattfinden soll oder wenn der zweite Frischwassertank unter Zwischenschaltung des ersten Frischwassertanks mit Frischwasser befüllt werden soll. Ansonsten ist die Hinleitung mittels des Umschaltventils gesperrt.

Gemäß einem weiteren Merkmal der Erfindung ist vorgesehen, dass der erste Strömungskreislauf offen ausgebildet ist und durch den Spülbehälter führt, wobei sowohl eingangsseitig als auch ausgangsseitig des Wärmetauschers jeweils ein Sperrventil vorgesehen ist. Diese Ausgestaltung ist insofern von Vorteil, als dass es gestattet ist, den Wärmetauscher sowohl eingangsseitig als auch ausgangsseitig zu sperren. Dies gestattet es in schon vorbeschriebener Weise, Spülflotte im Wärmetauscher zu bevorraten, so dass gemäß einem zweiten Verfahrensschritt ein Wärmeübertrag von bevorrateter Spülflotte auf durch den zweiten Frischwassertank im Umwälzbetrieb geführtes Frischwasser ermöglicht ist.

Die erfindungsgemäße Konstruktion erlaubt die schon vorstehend beschriebene Verfahrensdurchführung. Diese erbringt die ebenfalls schon vorstehend aufgeführten Vorteile.

Weitere Merkmale und Vorteile der Erfindung ergeben sich aus der nachfolgenden Beschreibung anhand der Figuren. Dabei zeigen:
- Fig. 1: in schematischer Darstellung eine erfindungsgemäße Geschirrspülmaschine;
- Fig. 2: in schematischer Darstellung eine erfindungsgemäße Geschirrspülmaschine gemäß einer alternativen Ausführungsform;
- Fig. 3: in schematischer Darstellung eine erfindungsgemäße Geschirrspülmaschine gemäß einer alternativen Ausführungsform;
- Fig. 4: in schematischer Darstellung eine erfindungsgemäße Geschirrspülmaschine gemäß einer alternativen Ausführungsform;
- Fig. 5: in schematischer Darstellung eine Pumpe der erfindungsgemäßen Geschirrspülmaschine und
- Fig. 6: in schematischer Darstellung eine Geschirrspülmaschine nach dem Stand der Technik.

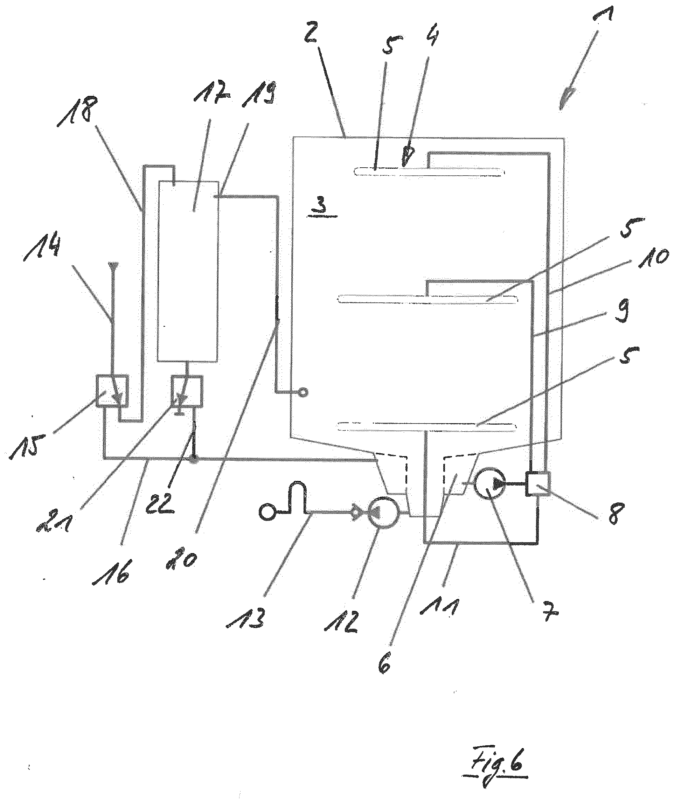

Fig. 6 lässt in rein schematischer Darstellung eine Geschirrspülmaschine 1 nach dem Stand der Technik erkennen. Die Geschirrspülmaschine 1 verfügt über ein in der Figur nicht näher dargestelltes Gehäuse, das unter anderem einen Spülbehälter 2 aufnimmt. Der Spülbehälter 2 stellt seinerseits einen Spülraum 3 bereit, der im bestimmungsgemäßen Verwendungsfall der Aufnahme von zu reinigendem Spülgut dient.

Zur Beschickung von zu reinigendem Spülgut mit Spülflotte dient eine Sprüheinrichtung 4, die innerhalb des Spülbehälters 2 angeordnet ist. Bevorzugterweise verfügt eine solche Sprüheinrichtung 4 über Sprüharme 5, die jeweils verdrehbar innerhalb des Spülbehälters 2 angeordnet sind. Gemäß dem gezeigten Ausführungsbeispiel verfügt die Sprüheinrichtung 4 über insgesamt drei Sprüharme 5, nämlich einen oberen Sprüharm, einen mittleren Sprüharm und einen unteren Sprüharm.

Der Spülraum 3 mündet in einen Sammeltopf 6 des Spülbehälters 2 ein, an den eine Umwälzpumpe 7 strömungstechnisch angeschlossen ist. Über entsprechende Versorgungsleitungen 9, 10 und 11 sind die Sprüharme 5 der Sprüheinrichtung 4 an die Umwälzpumpe 7 strömungstechnisch angeschlossen, und zwar unter Zwischenschaltung einer Wasserweiche 8. Im bestimmungsgemäßen Verwendungsfall kann damit eine Beschickung der Sprüheinrichtung 4 mit Spülflotte mittels der Umwälzpumpe 7 stattfinden, wobei je nach Stellung der Wasserweiche 8 entweder der obere und der mittlere Sprüharm 5 oder der untere Sprüharm 5 mit Spülflotte beschickt werden.

An den Sammeltopf 6 ist des Weiteren eine Abwasserpumpe 12 strömungstechnisch angeschlossen, die im Bedarfsfall im Sammeltopf 6 befindliche Spülflotte abpumpt und der Abwasserleitung 13 zuführt, infolgedessen die Spülflotte verworfen wird.

Die Geschirrspülmaschine 1 ist zudem an eine Frischwasserleitung 14 angeschlossen. Typischerweise ist der Frischwasserleitung 14 ein Enthärter strömungstechnisch vorgeschaltet, der in der Figur nicht näher dargestellt ist. Die Frischwasserleitung 14 mündet in ein Umschaltventil 15 ein. Ausgangsseitig des Umschaltventils 15 sind eine Zuführleitung 16 sowie eine Tankleitung 18 vorgesehen. Damit kann je nach Stellung des Umschaltventils 15 entweder die Zuführleitung 16 oder die Tankleitung 18 mit Frischwasser bedient werden.

Die Zuführleitung 16 mündet in den Sammeltopf 6 ein. Bei einer Beschickung der Geschirrspülmaschine 1 mit Frischwasser über die Zuführleitung 16 strömt mithin Frischwasser über die Frischwasserleitung 14, das Umschaltventil 15 und die Zuführleitung 16 direkt in den Sammeltopf 6 ein.

Die Tankleitung 18 mündet in einen Frischwassertank 17 ein. Dieser ist typischerweise dem Spülbehälter 2 nebengeordnet und als Seitentank an einer Seitenwand des Spülbehälters 2 angebracht.

Der Frischwassertank 17 steht in strömungstechnischer Verbindung mit der Zuführleitung 16, und zwar mittels einer Leitung 22. Diese ist unter Zwischenschaltung eines Sperrventils 21 an den Frischwassertank 17 strömungstechnisch angeschlossen.

Sofern sich das Sperrventil 21 in Sperrstellung befindet, wie in der Figur dargestellt, ist die Leitung 22 verschlossen. Gemäß dieser Stellung des Sperrventils 21 kann mithin kein vom Frischwassertank bevorratetes Frischwasser durch die Leitung 22 hindurch in die Zuführleitung 16 strömen. Bei geöffnetem Sperrventil 21 gelangt indes vom Frischwassertank 17 bevorratetes Frischwasser durch die Leitung 22 und die Zuführleitung 16 in den Sammeltopf 6.

Der Frischwassertank 17 steht zudem in strömungstechnischer Verbindung mit dem vom Spülbehälter 2 bereitgestellten Spülraum 3. Zu diesem Zweck verfügt der Frischwassertank 17 über einen Überlauf 19, an den sich eine Überlaufleitung 20 anschließt, die in den Spülraum 3 mündet. Bei einer etwaigen Überfüllung des Frischwassertanks 17 mit Frischwasser gelangt dieses über den Überlauf 19 und die Überlaufleitung 20 direkt in den Spülraum 3. Die Überlaufleitung 20 dient dem Frischwassertank 17 auch als Entlüftungsleitung.

Der Frischwassertank 17 dient dazu, nach Abschluss eines bestimmungsgemäß durchlaufenen Spülprogramms mit Frischwasser befüllt zu werden. Das vom Frischwassertank 17 bevorratete Frischwasser kann sich bis zu Durchführung eines nächsten Spülprogramms auf Raumtemperatur erwärmen, so dass die im nachfolgenden Spülprogramm benötigte Heizenergie zur Aufheizung der Spülflotte in vorteilhafter Weise verringert ist.

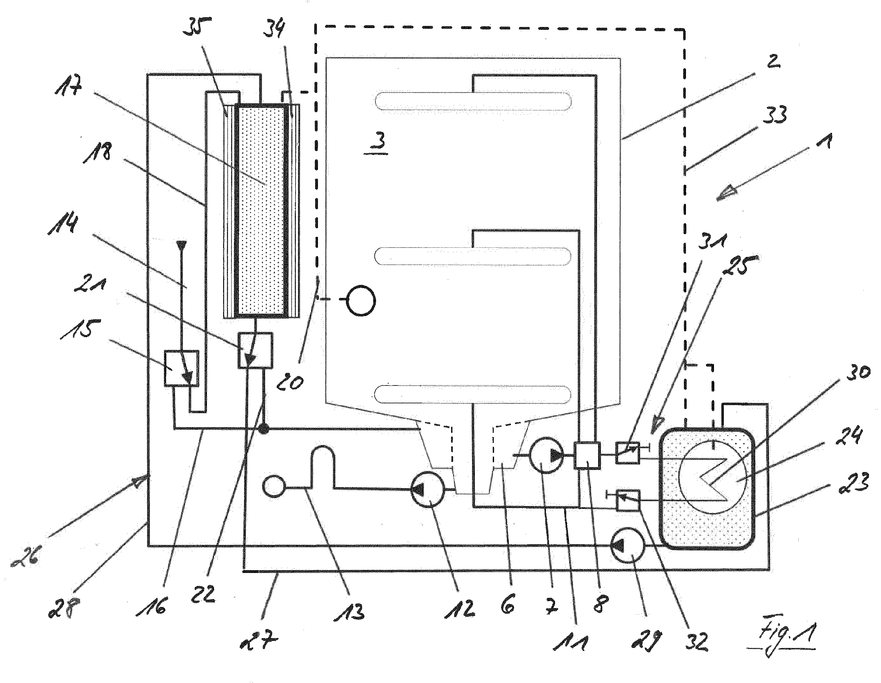

Fig. 1 zeigt in schematischer Darstellung ein erfindungsgemäß ausgebildete Geschirrspülmaschine 1, wobei die im Vergleich zum Stand der Technik nach Fig. 6 gleichen Baukomponenten der Geschirrspülmaschine 1 dieselben Bezugszeichen tragen.

Die erfindungsgemäße Geschirrspülmaschine 1 zeichnet sich durch einen zweiten Frischwassertank 23 aus. Des Weiteren ist im Unterschied zum Stand der Technik ein Wärmetauscher 24 vorgesehen. Dieser ist vom zweiten Frischwassertank 23 beherbergt.

Der Spülbehälter 2 und der Wärmetauscher 24 sind in einen gemeinsamen, ersten Strömungskreislauf 25 integriert, welcher Strömungskreislauf 25 einer Spülflottenumwälzung dient. Im bestimmungsgemäßen Verwendungsfall kann mithin Spülflotte aus dem Spülbehälter 2 in den Wärmetauscher 24 gefördert werden und von hieraus zurück in den Spülbehälter 2.

Der erste Frischwassertank 17 und der zweite Frischwassertank 23 sind in einen gemeinsamen zweiten Strömungskreislauf 26 integriert, welcher Strömungskreislauf 26 der Frischwasserumwälzung dient. Im bestimmungsgemäßen Verwendungsfall kann mithin vom ersten Frischwassertank 17 Frischwasser in den zweiten Frischwassertank 23 gleitet und von dort aus zurück in den ersten Frischwassertank 17 geführt werden.

Der die beiden Frischwassertanks 17 und 23 strömungstechnisch miteinander verbindende zweite Strömungskreislauf 26 ist geschlossen ausgebildet. Er verfügt über eine Hinleitung 27 einerseits und eine Rückleitung 28 andererseits. Dabei führt die Hinleitung 27 vom ersten Frischwassertank 17 zum zweiten Frischwassertank 23. Die Rückleitung 28 ist in zur Hinleitung 27 umgekehrten Richtung verlegt und führt vom zweiten Frischwassertank 23 zum ersten Frischwassertank 17.

In die Rückleitung 28 des zweiten Strömungskreislaufs 26 ist eine Umwälzpumpe 29 integriert. Diese dient dazu, im Bedarfsfall aus dem in Höhenrichtung unteren Frischwassertank 23, auch Sockeltank genannt, Frischwasser in den in Höhenrichtung oberen Frischwassertank 17, auch Seitentank genannt, durch pumpen zu überführen.

In die Hinleitung 27 des zweiten Strömungskreislaufs 26 ist ein Umschaltventil integriert, bei dem es sich bevorzugterweise um das Umschaltventil 21 handelt. Dieses schließt sich in Durchströmungsrichtung an den ersten Frischwassertank 17 an und erlaubt eine wahlweise Beschickung entweder der Hinleitung 27 des zweiten Strömungskreislaufs 26 oder der über die Zuführleitung 16 in den Spülbehälter 3 mündende Leitung 22.

Eine Befüllung von erstem Frischwassertank 17 und zweitem Frischwassertank 23 ist wie folgt möglich. Über die Frischwasserleitung 14 und das Umschaltventil 15 gelangt Frischwasser durch die Tankleitung 18 in den Frischwassertank 1. Das Sperrventil 21 ist auf die Hinleitung 27 des Strömungskreislaufs 26 geschaltet, so dass das in den ersten Frischwassertank 17 eingeleitete Frischwasser durch den Frischwassertank 17 hindurch in den zweiten Frischwassertank 23 strömt. Sobald der zweite Frischwassertank 23 mit Frischwasser befüllt ist, füllt sich auch der erste Frischwassertank 17 mit Frischwasser an. Eine Zuleitung von Frischwasser über die Frischwasserleitung 14 endet, sobald auch der erste Frischwassertank 17 mit Frischwasser befüllt ist.

Bei mit Frischwasser befüllten Tanks 17 und 23 ist ein Umwälzbetrieb wie folgt möglich. Die in die Rückleitung 28 des zweiten Strömungskreislaufs 26 integrierte Pumpe 29 wird gestartet. Infolgedessen kommt es zu einem Abpumpen des im zweiten Frischwassertank 23 befindlichen Frischwassers. Dieses wird über die Rückleitung 28 in den ersten Frischwassertank 17 gefördert. Bei geöffnetem Sperrventil 21 tritt in Entsprechung der zugeführten Menge an Frischwasser Frischwasser aus dem ersten Frischwassertank 17 aus und gelangt der Schwerkraft folgend über die Hinleitung 27 zum zweiten Frischwassertank 23. Infolgedessen wir im Strömungskreislauf 26 Frischwasser umgewälzt.

Der erste Strömungskreislauf 25, in welchen der Spülbehälter 2 und der Wärmetauscher 24 integriert sind, ist offen ausgebildet. Eine Freistrecke führt durch den Spülbehälter 2. Eingangsseitig als auch ausgangsseitig des Wärmetauschers 24 ist jeweils ein Sperrventil 31 und 32 vorgesehen. Unter Zwischenschaltung des Sperrventils 31 ist der Wärmetauscher 24 eingangsseitig an die Wasserweiche 8 angeschlossen. Unter Zwischenschaltung des Sperrventils 32 ist der Wärmetauscher 24 ausgangsseitig an die Versorgungsleitung 11 angeschlossen.

Hinsichtlich des Wärmetauschers 24 sind folgende Betriebsweisen möglich: Bei geschlossenen Sperrventilen 31 und 32, wie dies in Fig. 1 dargestellt ist, ist der Wärmetauscher 24 sowohl eingangsseitig als auch ausgangsseitig verschlossen. Eine Beschickung des Wärmetauschers 24 mit Spülflotte ist nicht möglich. Bei dieser Stellung der Sperrventile 31 und 32 erfolgt bei in Betrieb befindliche Umwälzpumpe 7 eine Beschickung der Sprüharme 5 mit Spülflotte über die Versorgungsleitungen 9, 10 und 11, wobei je nach Stellung der Wasserweiche 8 entweder die beiden oberen Sprüharme 5 oder der untere Sprüharm 5 mit Spülflotte versorgt werden.

Bei geöffneten Sperrventilen 31 und 32 kann bei entsprechender Stellung der Wasserweiche 8 eine Beschickung des Wärmetauschers 24 mit Spülflotte erfolgen, in welchem Fall die Spülflotte nach einem Passieren der Wasserweiche 8 im ersten Strömungskreislauf 25 umgewälzt wird, das heißt durch die Leitung 30 in die Versorgungsleitung 11 zum unteren Sprüharm 5 geführt wird, dort über den unteren Sprüharm 5 abgegeben und zurück in den Sammeltopf 6 geleitet wird, von wo aus sie dann erneut durch die Umwälzpumpe 7 angesaugt und über die Wasserweiche 8 erneut in die Leitung 30 geführt wird. Um zu vermeiden, dass bei einem solchen Umwälzbetrieb der Spülflotte durch den Wärmetauscher 24 hindurch im Spülraum 3 befindliches Spülgut mit Spülflotte benetzt wird, wird die Umwälzpumpe 7 nur mit verminderter Drehzahl betrieben, so dass die umgewälzte Spülflotte nur vermindert druckbeaufschlagt ist, so dass sie ohne bis zum Spülgut hochzuspritzen aus dem unteren Sprüharm 5 austritt.

Die Sperrventile 31 und 32 können gemäß einer dritten Funktionsweise geschlossen werden, wenn sich noch Spülflotte innerhalb der Leitung 30 befindet. In diesem Fall wird Spülflotte vom Wärmetauscher 24 bevorratet, bis zumindest das Sperrventil 32 zum Ablassen der bevorrateten Spülflotte wieder geöffnet wird.

Die vorbeschriebene Konstruktion erlaubt zwecks Wärmerückgewinnung eine Verfahrensdurchführung wie folgt:
Nach Beendigung eines bestimmungsgemäß durchgeführten Spülprogramms werden die beiden Frischwassertanks 17 und 23 mit Frischwasser befüllt. Dieses kann sich bis zur Durchführung eines nächsten Spülprogramms auf Raumtemperatur erwärmen.

Sobald dann ein nächstes Spülprogramm gestartet ist, wird mit Beginn eines Reinigungsprogramms das im ersten und im zweiten Frischwassertank 17 und 23 bevorratete Frischwasser in den Spülbehälter 2 geleitet und das Reinigungsprogramm wird durchgeführt. Währenddessen werden der erste und der zweite Frischwassertank 17 und 24 mit Frischwasser wieder aufgefüllt.

Nach einer Beendigung des Reinigungsprogramms werden zeitgleich einerseits aus dem Spülbehälter 2 stammende Spülflotte im Umwälzbetrieb durch den ersten Strömungskreislauf 25 und andererseits aus den Frischwassertanks 17 und 24 stammendes Frischwasser im Umwälzbetrieb durch den zweiten Strömungskreislauf 26 geführt. Infolgedessen kommt es zu einem Wärmeübertrag von der während der Durchführung des Reinigungsprogramms aufgeheizten und nach Beendigung des Reinigungsprogramms noch immer heißen Spülflotte auf das Frischwasser, womit sich das Frischwasser aufheizt.

Nach Ablauf einer vorgebbaren Zeitdauer wird der Umwälzbetrieb zumindest bezüglich des ersten Strömungskreislaufs 25 beendet und die eingangs- und ausgangsseitig des Wärmetauschers 24 jeweils vorgesehenen Sperrventile 31 und 32 werden geschlossen.

Alsdann wird die Abwasserpumpe 12 eingeschaltet und die im Sammeltopf befindliche Spülflotte wird abgepumpt und der Abwasserleitung 13 zugeführt. Die vom Wärmetauscher 24 bevorratete Spülflotte verbleibt bei nach wie vor geschlossenen Sperrventilen 31 und 32 im Wärmetauscher 24, wird also von diesem bevorratet.

Zu Beginn eines Zwischenspülprogramms wird im ersten Frischwassertank 17 bevorratetes Frischwasser in den Spülbehälter 2 geleitet und das Zwischenspülprogramm wird durchgeführt. Dabei ist das im ersten Frischwassertank 17 bevorratete Frischwasser aufgrund des zuvor durchgeführten Wärmeübertrags von der Spülflotte auf das Frischwasser vorgewärmt.

Der erste Frischwassertank 17 wird mit Frischwasser wieder befüllt. Während der Durchführung des Zwischenspülprogramms wird das aus den Frischwassertanks 17 und 23 stammende Frischwasser im Umwälzbetrieb durch den zweiten Strömungskreislauf 26 geführt. Es erfolgt insoweit eine Vermischung des nach einer Wiederauffüllung kalten Frischwassers aus dem Frischwassertank 17 und des vorgewärmten Frischwassers aus dem Frischwassertank 23. Zudem erfolgt infolge des Umwälzbetriebs des Frischwassers eine erneute Wärmeübertragung von der noch immer zumindest warmen und vom Wärmetauscher 24 bevorrateten Spülflotte auf das im Umwälzbetrieb durch den zweiten Strömungskreislauf 26 geführte Frischwasser.

Sobald ein Zwischenspülprogramm beendet ist, wird die im Wärmetauscher 24 noch befindliche Spülflotte abgepumpt und der Wasserleitung 13 zugeführt.

In beiden Frischwassertanks 17 und 23 befindet sich dann vorgewärmtes Frischwasser. Dieses wird zu Beginn eines Klarspülprogramms in den Spülbehälter 2 geleitet und ein Klarspülprogramm wird durchgeführt. Während oder nach einer Beendigung des Klarspülprogramms werden der erste und der zweite Frischwassertank 17 und 23 mit Frischwasser wieder befüllt, so dass sich das Frischwasser bis zur Durchführung eines erneuten Spülprogramms auf Raumtemperatur aufwärmen kann.

Sowohl der Frischwassertank 23 als auch der davon beherbergte Wärmetauscher 24 sind an eine Entlüftungsleitung 33 angeschlossen. Diese mündet in den Spülbehälter 2 ein, gegebenenfalls unter Zwischenschaltung der als Entlüftungsleitung für den ersten Frischwassertank 17 dienenden Überlaufleitung 20, wie in Fig. 1 dargestellt.

Gemäß der Ausführungsform nach Fig. 1 ist im Übrigen vorgesehen, dass der erste Frischwassertank 17 beidseitige seiner beiden Großflächen mit einer Isolierung 34 bzw. 35 ausgerüstet ist. Dabei ist die Isolierung 34 zwischen Frischwassertank 17 und Spülbehälter 2 angeordnet. Mit der Isolierung 34 bzw. 35 wird erreicht, dass nach einer Einfüllung von kaltem Frischwasser in den Frischwassertank 17 keine Wärme aus der den Frischwassertank 17 umgebenden Atmosphäre abgezogen und auf das im Frischwassertank 17 bevorratete Frischwasser übertragen wird. Insbesondere wird eine ungewollte Auskühlung der zugehörigen Seitenwand des Spülbehälters 2 vermieden.

Auch der zweite Frischwassertank 23 kann mit einer entsprechenden Isolierung ausgerüstet sein. Bevorzugt ist indes auch eine beabstandete Anordnung des zweiten Frischwassertanks 23 zum Spülbehälter 2, so dass keine direkte Wärmebrücke zwischen zweiten Frischwassertank 23 und Spülbehälter 2 ausgebildet ist.

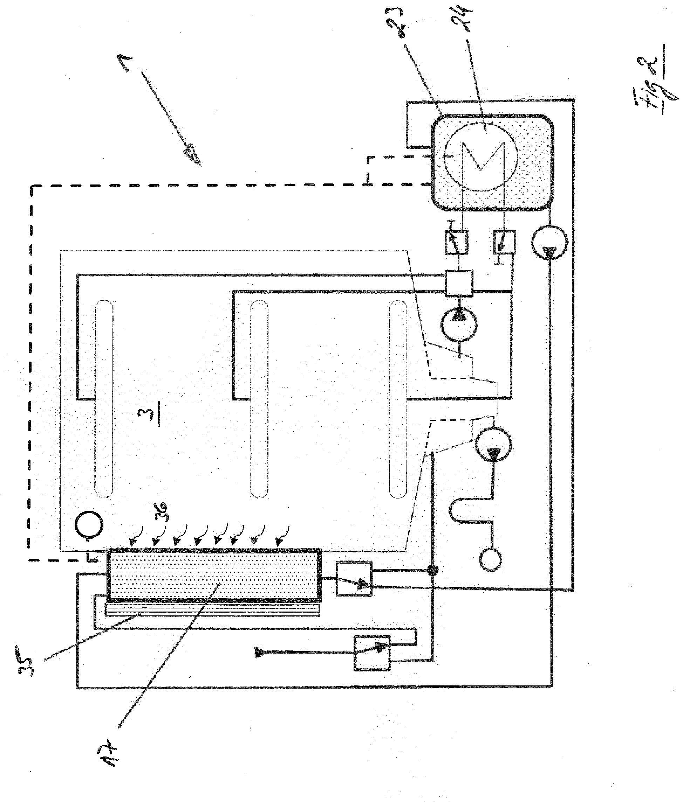

Die Ausführungsform nach Fig. 2 unterscheidet sich von der nach Fig. 1 dadurch, dass der Frischwassertank 17 unter Ausbildung einer Wärmebrücke direkt außenseitig des Spülbehälters 2 angeordnet ist. Gemäß dieser Ausgestaltung wird im Unterschied zur Ausführungsform nach Fig. 1 im bestimmungsgemäßen Betriebsfall ein Wärmeübertrag vom Spülbehälter 2 auf den Frischwassertank 17 und das davon bevorratete Frischwasser erreicht, wie dies durch die Pfeile 36 symbolisiert ist. Gemäß dieser Konstruktion kommt es zu einem Abzug von Wärme aus dem Spülbehälter 2, womit zwar mehr Heizenergie zur Erwärmung der Spülflotte benötigt wird, doch das Frischwasser im Frischwassertank 17 wird durch den Wärmeaustrag aus dem Spülbehälter auf ein höheres Temperaturniveau geführt, so dass in nachfolgenden Programmschritten weniger Heizenergie zur Erwärmung der Spülflotte benötigt wird.

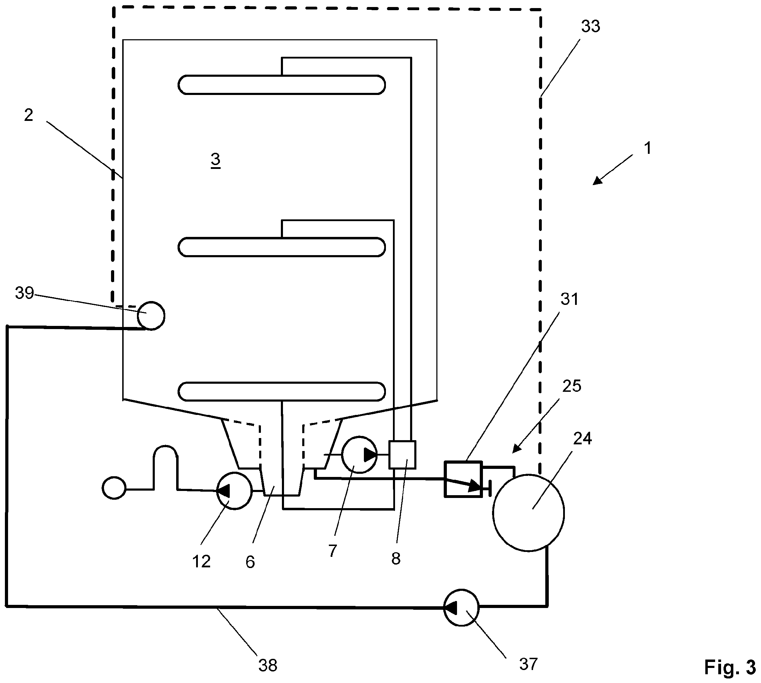

Fig. 3 zeigt eine Alternative zur Befüllung und Entleerung des Wärmetauschers 24, wobei in dieser Darstellung zur leichteren Verständlichkeit einige Komponenten, insbesondere der erste Frischwassertank 17 und der zweite Frischwassertank 23 und die zugehörigen Leitungen, weggelassen wurden. Diese Komponenten können insbesondere so ausgebildet sein, wie in Fig. 1 und 2 dargestellt.

Durch den Einsatz einer zusätzlichen Pumpe 37 in der Ablaufleitung 38 des Wärmetauschers 24 wird es möglich, Spülflotte während einer Wärmetauschphase bis zu einer Entlüftungsöffnung 39 hoch zu fördern, von wo aus die Spülflotte durch den Spülbehälter 2 hindurch bis zum Sammeltopf 6 zurückfließen kann.

Dadurch wird verhindert, dass es innerhalb des Sammeltopfes 6 zu einem Kurzschlussstrom zwischen dem Zu- und dem Ablauf des Wärmetauschers kommen kann, was aufgrund dessen Nähe zum Sammeltopf 6 durchaus vorkommen kann. Ein weiterer Vorteil liegt darin, dass sich der Wärmetauscher 24 größer auslegen lässt. Da die Befüllung des Wärmetauschers 24 infolge Schwerkraft erfolgt und die Entleerung durch die zusätzliche Pumpe 37 bewerkstelligt wird, wird es möglich, den Wärmetauscher 24 weiter unten im Sockel der Geschirrspülmaschine 1 zu positionieren. Dieser kann so mit dem Ablauf viel tiefer positioniert werden, was ein größeres Füllvolumen ermöglicht.

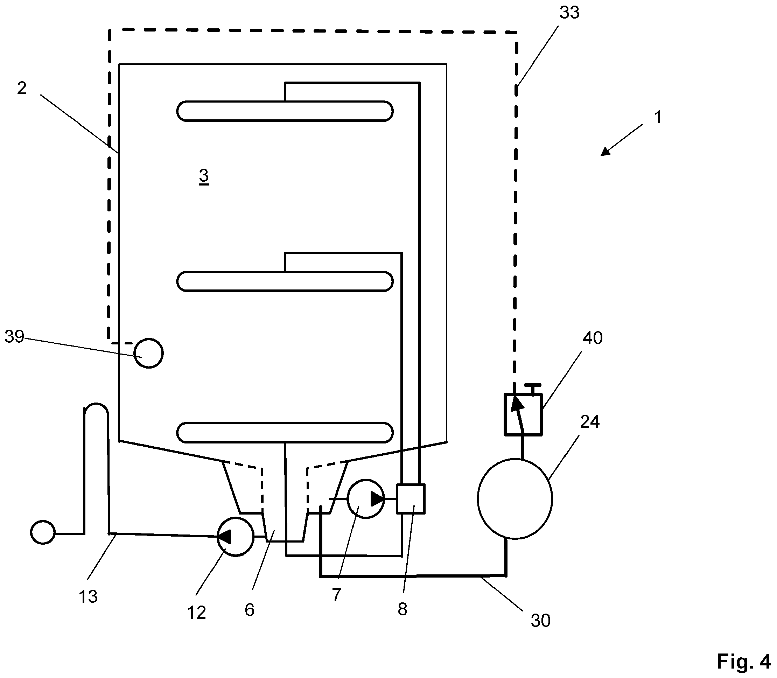

Fig. 4 zeigt eine weitere Alternative zur Befüllung und Entleerung des Wärmetauschers 24, wobei auch in dieser Darstellung zur leichteren Verständlichkeit einige Komponenten, insbesondere der erste Frischwassertank 17 und der zweite Frischwassertank 23 und die zugehörigen Leitungen, weggelassen wurden. Diese Komponenten können insbesondere so ausgebildet sein, wie in Fig. 1 und 2 dargestellt.

Zur Befüllung wird ein Entlüftungsventil 40 geöffnet, das die Entlüftungsleitung 33 freigibt und so die Befüllung des Wärmetauschers 24 über die Leitung 30 schwerkraftgetrieben ermöglicht. Für eine zweite Wärmetauschphase, bei der die Spülflotte zwischengespeichert und der Rest abgepumpt wird, wird das Entlüftungsventil 40 geschlossen. Der Vorteil dieser Lösung ist der, dass auf die beiden Sperrventile 31 und 32 gemäß der Ausführungsform beispielsweise nach Fig. 1 verzichtet werden kann und nur ein einfaches Magnetventil als Entlüftungsventil 40 geschaltet werden muss. Letzteres ist im Aufbau vergleichsweise einfach und hat eine schnellere Reaktionszeit. Die Entleerung des Wärmetauschers 24 erfolgt in diesem Beispiel über dieselbe Leitung 30 bei gleichzeitigem Betrieb der Abwasserpumpe 12, welche die Spülflotte aus dem Sammeltopf der Abwasserleitung 13 zuführt.

Im Ergebnis der erfindungsgemäßen Ausgestaltung ist in vorteilhafter Weise die Kombination unterschiedlicher Wärmetauschprinzipien in einem Gesamtkonzept ermöglicht, so dass die rückgewonnene Wärmeenergie maximiert ist, wobei im Unterschied zum Stand der Technik nicht nur vorgewärmtes Frischwasser für ein Klarspülprogramm, sondern auch für ein Reinigungsprogramm bereitsteht.

Gleichzeitig ist die Frischwasservorbereitung so ausgelegt, dass diese energetisch möglichst wenig den Spülprozess beeinflusst, um diesem möglichst wenig Wärme zu entziehen. Einen möglichst großen Tank in der Seitenwand zu integrieren, ist zu diesem Zweck ungünstig. Deshalb wird in möglichst optimaler Weise der vorhandene Bauraum im Sockel der Geschirrspülmaschine 1 genutzt. Der kompaktere Bauraum im Sockel der Geschirrspülmaschine 1 ermöglicht es, dass der zweite Frischwassertank 23 zum Spülbehälter 3 beabstandet ausgelegt werden kann, ohne dabei zu stark an Volumen zu verlieren. Der Abstand zwischen Spülbehälter 2 und Frischwassertank 23 liegt bei vorzugsweise 5 mm, noch mehr bevorzugt bei 15 mm. Da auch der Bereich unterhalb des Sammeltopfes 6 und der Umwälzpumpe 7 durch den Frischwassertank 23 genutzt werden soll, ist es erforderlich, eine separate Pumpe 29 vorzusehen, welche aus dem tieferliegenden Frischwassertank 23 das Frischwasser herausfördern kann. Ohne diese Pumpe 29 wäre es nicht möglich, das Wasser in den höhergelegenen Spülraum 3 zu überführen. Mittels der Pumpe 29 lässt sich mithin eine optimierte Ausnutzung des Sockelvolumens erreichen.

Da es sinnvoll ist, auch den Wärmetauscher 24 in den zweiten Frischwassertank 23 zu integrieren, werden ca. 1 Liter bis 1,5 Liter an zusätzlichem Frischwasservolumen benötigt, das aus Bauraumgründen nicht vom Frischwassertank 23 bereitgestellt werden kann. Aus diesem Grunde ist der zusätzliche Frischwassertank 17 vorgesehen. Dieser Frischwassertank 17 ist gemäß der Ausführungsform nach Fig. 1 bevorzugterweise beabstandet zum Spülbehälter 2 angeordnet und nach außen hin mit einer Wärmedämmung in Form der Isolierungen 34 und 35 ausgerüstet. Hierdurch ist erreicht, dass sich der Frischwassertank 17 möglichst wenig mit aufheizt und dem Spülprozess somit möglichst wenig Wärme entzieht.

Um auch das Frischwasser für ein Zwischenspülen vorzuwärmen, wird in einer ersten Wärmetauschphase zwischen der Reinigungs- und Zwischenspülphase der Spülprozess unterbrochen. Während dieser ersten Wärmetauschphase zirkuliert das Wasser auf beiden Seiten, das heißt in beiden Strömungskreisläufen 25 und 26, womit sowohl Spülflotte als auch Frischwasser jeweils umgewälzt werden. In einer zweiten Wärmetauschphase wird die Spülflotte aus der Reinigungsphase im Wärmetauscher 24 zwischengespeichert und nur das Frischwasser wird zirkuliert. Während dieser zweiten Wärmetauschphase erfolgt gleichzeitig auch das Zwischenspülen.

Aus Bauraumgründen ist der Wärmetauscher 24, durch welchen die Spülflotte zirkulieren kann, in den Frischwassertank 23 integriert. Dies bietet zusätzliche Vorteile. So kann der Wärmetauscher 24 so ausgelegt werden, dass dieser vollständig von Frischwasser umgeben ist, damit die Wärmetauscherfläche maximiert ist. Der Frischwassertank 23 mit dem integrierten Wärmetauscher 24 befindet sich im Sockel der Geschirrspülmaschine 1 unterhalt des Spülbehälters 2. Dabei ist der Wärmetauscher 24 für Spülflotte im oberen Bereich des Frischwassertanks 23 so hoch angeordnet, dass sich dieser bei Öffnung der Ventile 31 und 32 infolge Schwerkraft in den Spülbehälter 2 entleeren kann. Die Spülflotte wird bei einer Entleerung des Wärmetauschers 24 sofort durch die Abwasserpumpe 12 abgefördert. Die Befüllung des Wärmetauchers 24 erfolgt durch die Umwälzpumpe 7 bei geöffneten Ventilen 31 und 32. Dabei ist der Wärmetauscherkreislauf in einem Bypass parallel zum Spülflottenkreislauf geschaltet und kann durch die Ventile 31 und 32 bestromt oder unterbrochen werden.

Mit der erfindungsgemäßen Ausgestaltung ist es erreicht, einen Teil der warmen Spülflotte möglichst gezielt abzukühlen, welcher Teil direkt nach dem Wärmeaustausch als Abwasser durch die Abwasserpumpe 12 aus der Geschirrspülmaschine 1 abgepumpt wird. Es ist deshalb vorgesehen, ein Spülprogramm während der ersten Wärmetauschphase zu unterbrechen und die Spülflotte durch den Wärmetauscher 24 zu fördern. Dies geschieht durch ein Absenken der Drehzahl der Umwälzpumpe 7 und einer Wasserweichenstellung für "Sprüharm oben". Dadurch strömt die Spülflotte nicht mehr durch den eigentlichen Spülflottenkreislauf, da die Umwälzpumpe 7 aufgrund der niedrigen Drehzahl nicht genug Druck aufbaut, um die Spülflotte bis zum oberen Sprüharm 5 hoch zu fördern. Bei gleichzeitig geöffneten Ventilen 31 und 32 strömt die Spülflotte stattdessen durch den Wärmetauscher 24, da dieser aufgrund seiner tiefen Anordnung im Sockel der Geschirrspülmaschine 1 weniger Pumpendruck erfordert und weniger Strömungswiderstand bietet. Die Abwasserpumpe 12 bleibt währenddessen ausgeschaltet, so dass sich ein konstanter Spülflottenkreislauf zwischen Spülbehälter 2 und Wärmetauscher 24 einstellt.

Der Wärmetauscher 24 ist so ausgelegt, dass dieser zwischen 1,0 Liter und 1,7 Liter Spülflotte aufnehmen kann. Die Gesamtmenge der nach Beendigung eines Spülprogramms angefallenen Spülflotte beträgt ca. 3 Liter.

Während der ersten Wärmetauschphase arbeiten beide Pumpen 7 und 29. Die Ventile 31 und 32 sind geöffnet. Das Frischwasser zirkuliert zwischen den beiden Frischwassertanks 17 und 23. Die Gesamtmenge an Frischwasser in beiden Tanks 17 und 23 beträgt mindestens 3,4 Liter, vorzugsweise 4 Liter. Davon werden 1 Liter bis 1,5 Liter für die Zwischenspülphasen benötigt und ca. 2,5 Liter bis 3 Liter für ein Klarspülen. Der Wärmetauscher 24 fasst ca. 1,6 Liter Spülflotte. Nach der ersten Wärmetauschphase werden somit ca. 1,4 Liter überschüssige Spülflotte durch die Abwasserpumpe 12 abgepumpt.

Nach einem Teilabpumpen der überschüssigen Spülflotte, aber noch vor der nächsten Spülphase wird der Sammeltopf 6 mit frischem, kaltem Wasser gereinigt. Zu diesem Zweck ist die an die Frischwasserleitung 14 angeschlossene Zuführleitung 16 vorgesehen, die das Tanksystem und den Wärmetauscher 24 nach der Erfindung umgeht. Dadurch wird vermieden, dass dem vorgewärmten Frischwasser in den Tanks 17 und 23 Wärme entzogen wird. Dies ist durch das Umschaltventil 15 ermöglicht, welches auf den Sammeltopf geschaltet wird und hierdurch eine direkte Verbindung zwischen der Frischwasserleitung 14 und dem Spülbehälter 2 schafft.

Die nach der Erfindung mögliche erste Wärmetauschphase erbringt den Vorteil eines höheren Wärmestroms pro Wärmetauschfläche aufgrund des beidseitigen Zirkulationsbetriebs, da erzwungene Konvektion von Spülflotte und Frischwasser in einem eigenen Frischwassertank 23 gegeben ist. Der Spülprozess wird während dieser Phase unterbrochen, um möglichst viel Spülflotte durch den Wärmetauscher 24 zu pumpen, gleichzeitig das Frischwasser zu zirkulieren und dadurch die Wärmeübertragungsleistung zu maximieren.

Des Weiteren kann bei den vorbeschriebenen Lösungen ohne Mehraufwand mindestens ein weiterer Wärmerückgewinnungsschritt während eines Zwischenspülens oder zusätzlich schon vorher während des Reinigens erfolgen. Daraus ergibt sich ein zeitlicher Vorteil, da der Spülprozess nicht unterbrochen werden muss und aufgrund einer längeren Wärmetauschphase auch mehr Energie übertragen werden kann.

Die erfindungsgemäße Lösung hat zudem den Vorteil, dass Wärmeenergie aus der ersten Reinigungsphase auf beide nachfolgenden Spülgänge, das heißt das Zwischenspülen und das Klarspülen übertragen werden kann, womit die Wärmerückgewinnung weiter optimiert ist.

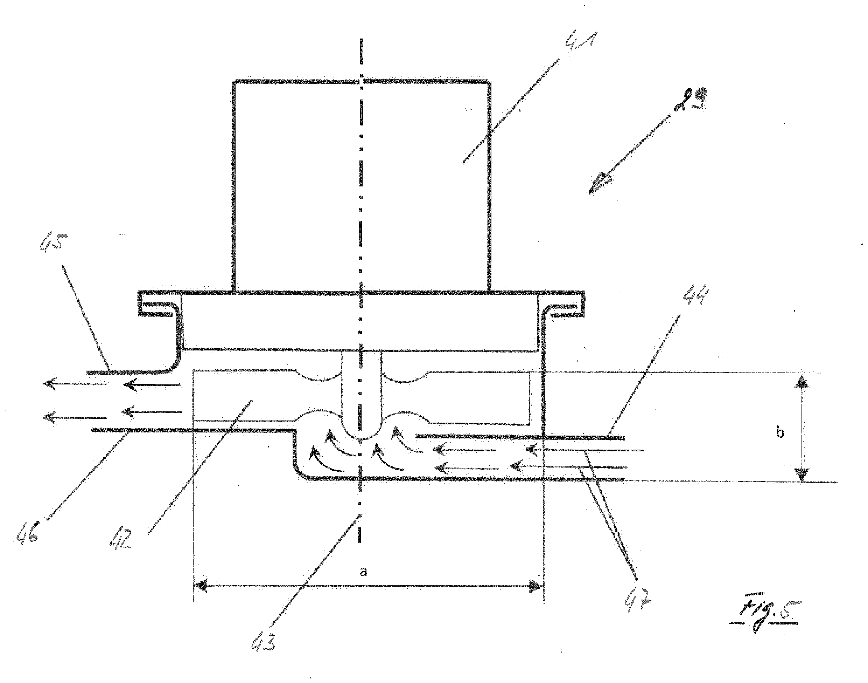

Fig. 5 zeigt in schematischer Seitenansicht die in die Rückleitung 28 des zweiten Strömungskreislaufs 26 integrierte Pumpe 29.

Die Pumpe 29 ist eine Radialpumpe in senkrechter Ausrichtung. Sie verfügt in an sich bekannter Weise über einen Motor 41 und ein davon im Betriebsfall angetriebenes Flügelrad 42, das innerhalb eines Pumpengehäuses 46 angeordnet ist. Im Betriebsfall verdreht das Flügelrad 42 um die Drehachse 43, die senkrecht ausgerichtet ist.

Das Pumpengehäuse weist einen Anschlussstutzen 44 sowie einen Anschlussstutzen 45 auf, die dem Anschluss entsprechender Leitungen bzw. Rohrleitungen des zweiten Strömungskreislaufes 26 dienen. Im bestimmungsgemäßen Verwendungsfall fördert die Pumpe 29 Frischwasser im zweiten Strömungskreislauf 26 im Umwälzbetrieb, das heißt unter Zwischenschaltung der beiden Frischwassertanks 17 und 23 im Kreislauf, wie dies gemäß der Pfeile 47 nach Fig. 5 angedeutet ist.

Bei einer horizontalen Ausrichtung der Pumpe 29 wäre der Frischwassertank 23 mindestens um den Abstand a oberhalb des Sockelbodens der Geschirrspülmaschine anzuordnen, damit das Flügelrad 42 auch dann im zu fördernden Frischwasser steht, wenn der Frischwassertank 23 nahezu leer ist. Da der Bauraum im Sockel der Geschirrspülmaschine möglichst ausgenutzt werden soll, ist die Pumpe 29 wie in Fig. 5 dargestellt senkrecht ausgerichtet, wobei das das Flügelrad 42 bereitstellende Pumpengehäuse 46 in Höhenrichtung unterhalb des Motors 41 angeordnet ist. Dabei ist der Abstand b maßgeblich für den Mindestabstand der Unterseite des Frischwassertanks 23 zum Sockelboden. Da aber das Abstandsmaß b deutlich kleiner ist als das Abstandsmaß a, kann bei der senkrechten Ausrichtung der Pumpe 29 der Boden des Frischwassertanks 23 deutlich tiefer liegen als bei einer horizontalen Ausrichtung der Pumpe 29, womit der Frischwassertank 23 ein deutlich größeres Füllvolumen bereitstellt. Ein entsprechender Vorteil könnte in einem alternativen Ausführungsbeispiel auch durch eine als Axialpumpe ausgebildete Pumpe 29 erreicht werden.

**Bezugszeichenliste**

| | | | |
|---|---|---|---|
| 1 | Geschirrspülmaschine | 25 | erster Strömungskreislauf |
| 2 | Spülbehälter | 26 | zweiter Strömungskreislauf |
| 3 | Spülraum | 27 | Hinleitung |
| 4 | Sprüheinrichtung | 28 | Rückleitung |
| 5 | Sprüharm | 29 | Umwälzpumpe |
| 6 | Sammeltopf | 30 | Leitung |
| 7 | Umwälzpumpe | 31 | Sperrventil |
| 8 | Wasserweiche | 32 | Sperrventil |
| 9 | Versorgungsleitung | 33 | Entlüftungsleitung |
| 10 | Versorgungsleitung | 34 | Isolierung |
| 11 | Versorgungsleitung | 35 | Isolierung |
| 12 | Abwasserpumpe | 36 | Pfeile |
| 13 | Abwasserleitung | 37 | Pumpe |
| 14 | Frischwasserleitung | 38 | Ablaufleitung |
| 15 | Umschaltventil | 39 | Entlüftungsöffnung |
| 16 | Zuführleitung | 40 | Entlüftungsventil |
| 17 | Frischwassertank | 41 | Motor |
| 18 | Tankleitung | 42 | Flügelrad |
| 19 | Überlauf | 43 | Drehachse |
| 20 | Überlaufleitung | 44 | Anschlussstutzen |
| 21 | Umschaltventil | 45 | Anschlussstutzen |
| 22 | Leitung | 46 | Pumpengehäuse |
| 23 | Frischwassertank | 47 | Pfeile |
| 24 | Wärmetauscher | | |

## Patentansprüche

1. Geschirrspülmaschine, insbesondere Haushaltsgeschirrspülmaschine, mit einem einen Spülraum (3) bereitstellenden Spülbehälter (2), der der Aufnahme von zu reinigendem Spülgut dient, und mit einem Frischwassertank (17), wobei der Frischwassertank (17) an den Spülbehälter (2) strömungstechnisch angeschlossen ist,
**gekennzeichnet durch**
einen zweiten Frischwassertank (23) und einen vom zweiten Frischwassertank (23) beherbergten Wärmetauscher (24), wobei der Spülbehälter (2) und der Wärmetauscher (24) in einen ersten Strömungskreislauf (25) zur Spülflottenumwälzung und der erste und der zweite Frischwassertank (17, 23) in einen zweiten Strömungskreislauf (26) zur Frischwasserumwälzung integriert sind.

2. Geschirrspülmaschine nach Anspruch 1,
**dadurch gekennzeichnet,**
**dass** der zweite Strömungskreislauf (26) geschlossen ausgebildet ist und eine Hinleitung (27) zwischen erstem und zweitem Frischwassertank (17, 23) sowie eine Rückleitung (28) zwischen zweitem und erstem Frischwassertank (23, 17) aufweist.

3. Geschirrspülmaschine nach Anspruch 2,
**dadurch gekennzeichnet,**
**dass** in die Rückleitung (28) eine Pumpe (29) integriert ist.

4. Geschirrspülmaschine nach Anspruch 2 oder 3,
**dadurch gekennzeichnet,**
**dass** in die Hinleitung (27) ein Umschaltventil (21) integriert ist, an das eine in den Spülbehälter (2) mündende Leitung (22, 16) angeschlossen ist.

5. Geschirrspülmaschine nach einem der vorhergehenden Ansprüche,
**dadurch gekennzeichnet,**
**dass** der erste Strömungskreislauf (25) offen ausgebildet ist und durch den Spülbehälter (2) führt, wobei sowohl eingangsseitig als auch ausgangsseitig des Wärmetauschers (24) jeweils ein Sperrventil (31, 32) vorgesehen ist.

6. Verfahren zum Betrieb einer Geschirrspülmaschine (1) nach einem der vorhergehenden Ansprüche,
- bei dem zu Beginn eines Reinigungsprogramms im ersten und im zweiten Frischwassertank (17, 23) bevorratetes Frischwasser in den Spülbehälter (2) geleitet und das Reinigungsprogramm durchgeführt wird,
- bei dem der erste und der zweite Frischwassertank (17, 23) mit Frischwasser wiederbefüllt werden und
- bei dem nach einer Beendigung des Reinigungsprogramms zeitgleich einerseits aus dem Spülbehälter (2) stammende Spülflotte im Umwälzbetrieb durch den ersten Strömungskreislauf (25) und andererseits aus den Frischwassertanks (17, 23) stammendes Frischwasser im Umwälzbetrieb durch den zweiten Strömungskreislauf (26) geführt wird.

7. Verfahren nach Anspruch 6, bei dem nach Ablauf einer vorgebbaren Zeitdauer der Umwälzbetrieb zumindest bezüglich des ersten Strömungskreislaufs (25) beendet wird und die eingangs- und ausgangsseitig des Wärmetauschers (24) jeweils vorgesehenen Sperrventile (31, 32) geschlossen werden.

8. Verfahren nach einem der Ansprüche 6 bis 7, bei dem die im Umwälzbetrieb durch den ersten Strömungskreislauf (25) geführte Spülflotte bis auf die vom Wärmetauscher (24) beherbergte Spülflotte abgepumpt und verworfen wird.

9. Verfahren nach einem der Ansprüche 6 bis 8,
- bei dem zu Beginn eines Zwischenspülprogramms im ersten Frischwassertank (17) bevorratetes Frischwasser in den Spülbehälter (2) geleitet und das Zwischenspülprogramm durchgeführt wird,
- bei dem der erste Frischwassertank (17) mit Frischwasser wiederbefüllt wird
und
- bei dem während der Durchführung des Zwischenspülprogramms aus den Frischwassertanks (17, 13) stammendes Frischwasser im Umwälzbetrieb durch den zweiten Strömungskreislauf (26) geführt wird.

10. Verfahren nach einem der Ansprüche 6 bis 9, bei dem nach einer Beendigung des Zwischenspülprogramms die noch im Wärmetauscher (24) befindliche Spülflotte abgepumpt und verworfen wird.

11. Verfahren nach einem der Ansprüche 6 bis 10,
- bei dem zu Beginn eines Klarspülprogramms im ersten und im zweiten Frischwassertank (17, 23) bevorratetes Frischwasser in den Spülbehälter (2) geleitet wird und das Klarspülprogramm durchgeführt wird und
- bei dem während und/oder nach einer Beendigung des Klarspülprogramms der erste und der zweite Frischwassertank (17, 23) mit Frischwasser wiederbefüllt werden.
